# EUROPEAN PATENT SPECIFICATION

(11) **EP 4 007 455 B1**
(45) Date of publication and mention of the grant of the patent: **17.07.2024**
(21) Application number: 20209826.5
(22) Date of filing: 25.11.2020
(51) Int. Cl.: H05B 47/11, H05B 47/115, H05B 47/12, H05B 47/125, H05B 47/175

(54) **A SENSOR ASSEMBLY FOR LIGHTING CONTROL**
SENSORANORDNUNG ZUR BELEUCHTUNGSSTEUERUNG
ENSEMBLE CAPTEUR POUR COMMANDE D'ÉCLAIRAGE

(43) Date of publication of application: 01.06.2022
(73) Proprietor: Helvar Oy Ab, 02150 Espoo (FI)
(72) Inventor: JUSLÉN, Henri, 02150 ESPOO (FI)
(74) Representative: Berggren Oy

(56) References cited:
- US-A1- 2014 300 276

## Description

### TECHNICAL FIELD

The example and non-limiting embodiments of the present invention relate to controlling operation of a lighting system and, in particular, to usage of a sensor assembly for controlling a lighting system.

### BACKGROUND

In many modern lighting systems luminaires arranged for illuminating a space are arranged into a lighting network where the luminaires may be able to communicate with each other and/or with a lighting control entity such as a lighting system controller. Such a lighting network may be based on wireless or wired communication between respective entities of the lighting network, e.g. on respective wireless links, on a wireless network or on a wired network or bus.

Lighting control provided by the lighting control entity may be based at least in part on observations of one or more environmental characteristics in the space the lighting system serves to illuminate, e.g. on sensor data obtained via one or more sensors arranged in the space and coupled to the lighting control entity. While such control of the lighting system may make both configuration and usage of the lighting system at least partially automatic, the extent of automation both in configuring the lighting control entity and in its usage to control lighting in the space is dependent on the type and amount of sensor data available at the lighting control entity and on characteristics of the lighting control entity itself.

In related art, US 2014/300276 A1 discloses a lighting system that includes luminaires installed at individual locations in premises, is commissioned by placing auxiliary commissioning devices in the premises at spaced apart locations and forming them into a wireless local network. The auxiliary commissioning devices each include a sensor to detect light from the luminaires, establishing the locations of the auxiliary commissioning devices in relation to the premises, for example by using ranging on the basis of signal strengths of the devices in the local network, and detecting light emitted from the luminaires individually with the sensors of the auxiliary commissioning devices such as to associate the luminaires with individual ones of the commissioning devices.

### SUMMARY

It is an object of the present invention to provide a lighting control technique for a lighting system that enables increasing the extent of automation in configuring the lighting control and controlling the lighting on basis of sensor data obtained in the space the lighting system serves to illuminate.

According to an example embodiment, a sensor assembly for controlling one or more aspects of light output of a plurality of luminaires is provided, the sensor assembly comprising a control portion, a communication portion for communication with other elements of the lighting system and a plurality of sensor units for observing environmental characteristics in said space, wherein each sensor unit is arranged to observe a respective predefined monitoring direction with respect to the sensor assembly that is different from respective predefined monitoring directions of other ones of the plurality of sensor units, wherein each sensor unit comprises a respective remote sensing device for detecting objects in the respective monitoring direction and a respective light sensor for observing light level in the respective monitoring direction, and wherein the control portion is arranged to: obtain respective luminaire identifications for said plurality of luminaires; determine a respective luminaire direction with respect to the sensor assembly for said plurality of luminaires on basis of respective light levels indicated by the light sensors; determine, on basis of respective monitoring directions of said plurality of sensor units in relation to the determined luminaire directions, a lighting control configuration for controlling said one or more aspects of light output of said plurality of luminaires on basis of sensor data received from said plurality of sensor units; and control, via said communication portion using the obtained luminaire identifications, said one or more aspects of light output of said plurality of luminaires in accordance with the determined lighting control configuration.

According to another example embodiment, a method for operating a sensor assembly in a space illuminated by a plurality of luminaires is provided, the sensor assembly comprising a plurality of sensor units arranged for observing environmental characteristics in said space, wherein each sensor unit is arranged to observe a respective predefined monitoring direction with respect to the sensor assembly that is different from respective predefined monitoring directions of other ones of the plurality of sensor units, wherein each sensor unit comprises a respective remote sensing device for detecting objects in the respective monitoring direction and a respective light sensor for observing light level in the respective monitoring direction, the method comprising: obtaining respective luminaire identifications for said plurality of luminaires; determining a respective luminaire direction with respect to the sensor assembly for said plurality of luminaires on basis of respective light levels indicated by the light sensors; determine, on basis of respective monitoring directions of said plurality of sensor units in relation to the determined luminaire directions, a lighting control configuration for controlling said one or more aspects of light output of said plurality of luminaires on basis of sensor data received from said plurality of sensor units; and controlling, using the obtained luminaire identifications, one or more aspects of light output of said plurality of luminaires in accordance with the determined lighting control configuration.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

The features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a sensor assembly according to an example;
Figure 3 schematically illustrates respective monitoring directions of sensor units of a sensor assembly in a reference plane according to an example;
Figure 4 illustrates a block diagram of some components of a sensor unit according to an example;
Figure 5 illustrates a method according to an example;
Figure 6 illustrates a method according to an example;
Figure 7 illustrates a method according to an example; and
Figure 8 illustrates a block diagram of some components of an apparatus according to an example.

### DESCRIPTION OF SOME EMBODIMENTS

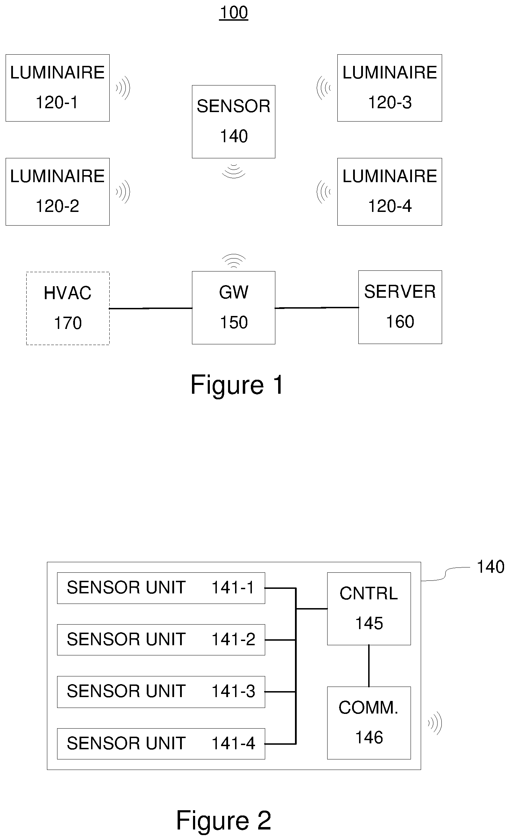

Figure 1 illustrates a block diagram of some components of a lighting system 100 according to an example. The lighting system 100 may be arranged for illuminating an indoor space of a building. In this regard, the space the lighting system 100 serves to illuminate may be one of a plurality of spaces of the building. The lighting system 100 as illustrated in Figure 1 includes luminaires 120-1, 120-2, 120-3 and a sensor assembly 140. The luminaires 120-1 to 120-3 represent a plurality of luminaires 120, where an individual luminaire may be referred to via a reference number 120-k. Each luminaire 120-k may be arranged for illuminating a respective portion of said space. The luminaires 120-k are communicatively coupled to the sensor assembly 140 and they may be also communicatively coupled to each other. While the illustration of Figure 1 suggests wireless communication between elements of the lighting system 100, which may be provided via a wireless communication network and/or via respective wireless links, in another example the communicative couplings within the lighting system 100 may be provided via a wired communication medium, such as a wired communication network or communication bus.

The sensor assembly 140 may be arranged for controlling one or more aspects of light output of a plurality of luminaires 120. In an example at least one aspect of light output of the luminaires 120-k may be further controlled on basis of respective sensor devices provided in the luminaires 120-k. Hence, the lighting system 100 comprising the plurality of luminaires 120 and the sensor assembly 140 may be a stand-alone one in the sense that it is not necessarily coupled to other systems in the space and/or in the building. In another example, at least some elements of the lighting system 100, e.g. the sensor assembly 140, may be communicatively coupled to a server device 160 via a gateway device 150, as shown in the illustrative example of Figure 1. Alternatively or additionally, the lighting system 100 may be communicatively coupled to or provided as part of a building automation system that may also serve to provide other services or functionalities available in said space. As an example in this regard, the gateway 150 may couple at least some elements of the lighting system 100, e.g. the sensor assembly 140, may be coupled to a HVAC system 170 and/or to a building automation server therein.

Figure 2 illustrates a block diagram of some components of a sensor assembly 140 according to an example. The sensor assembly 140 according to this example comprises sensor units 141-1, 141-2, 141-3, 141-4, a control portion 145 and a communication portion 146. The sensor units 141-1 to 141-4 represent a plurality (i.e. two or more ) sensor units 141 where an individual sensor unit may be referred to via a reference number 141-j. According to an example, the sensor units 141-j of the sensor assembly 140 are substantially identical to each other. Each sensor unit 141-j comprises respective one or more sensor devices for observing respective environmental characteristics in a monitored space, i.e. in an operating environment of the sensor assembly 140. In this regard, the monitored space may be considered to be substantially aligned with the indoor space the lighting system 100 serves to illuminate. The one or more sensor devices of the sensor unit 141-j may be arranged to monitor a respective predefined monitoring direction with respect to the sensor assembly 140 that is different from respective predefined monitoring directions observed by other ones of the plurality of sensor units 141.

The sensor assembly 140 is intended for installation at a central position within the monitored space to enable observing environmental characteristics in multiple directions with respect to sensor assembly 140. In this regard, the respective monitoring directions of the plurality of sensor units 141 may be arranged to cover a predefined overall range of directions around the sensor assembly 140 in a reference plane, where the respective monitoring directions of the sensor units 141-j may be evenly spaced over the overall range of directions in the reference plane. In an example, the overall range of directions covers a full circle (i.e. 360 degrees) around the sensor assembly in the reference plane, whereas in other examples the overall range of directions may cover a predefined portion of the full circle. The reference plane is intended for alignment with a horizontal plane when the sensor assembly 140 is arranged (e.g. installed) in its operating position. The operating position of the sensor assembly 140 may be alternatively referred to as an upright position of the sensor assembly 140. The sensor assembly 140 may be designed for mounting to a ceiling of the monitored space, either (substantially) directly or via a suspension arrangement to ensure an installation height that enables observing the environmental characteristics at sufficient accuracy and reliability.

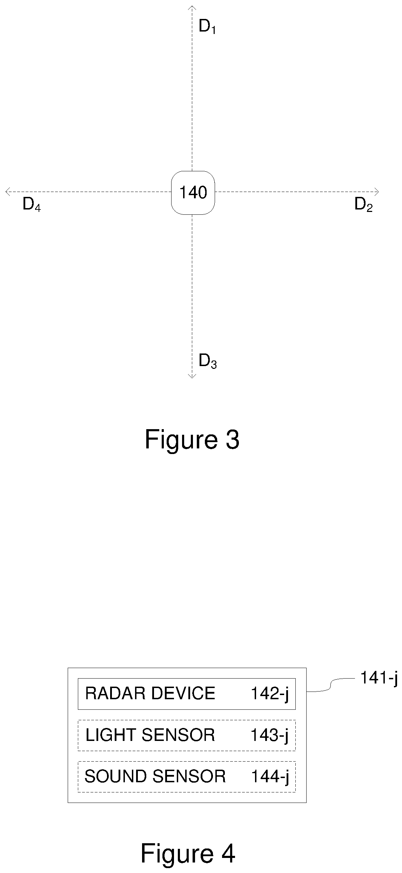

Figure 3 schematically illustrates an example of respective monitoring directions in the reference plane resulting from an arrangement of the plurality of sensor units 141 such that their respective monitoring directions (shown as respective dashed arrows D₁, D₂, D₃, D₃) in the reference plane are evenly distributed over a full circle around the sensor assembly 140. Therein, the respective monitoring direction of the sensor unit 141-j (e.g. D₂) is in a 90-degree angle with respect to respective monitoring directions of each of the adjacent sensor units 141-j (e.g. D₁ and D₃).

According to an example, the respective monitoring directions of the sensor units 141-j may be aligned with respect to the reference plane such that they are parallel or substantially parallel with the reference plane, whereas in another example the respective monitoring directions of the sensor units 141-j may be arranged in a predefined non-zero inclination angle with respect to the reference plane, such that the monitoring directions are inclined downwards from the reference plane when the sensory assembly 140 is arranged in its operating position (i.e. in the upright position). In the latter scenario, the inclination angle may be chosen, for example, from the range from a few degrees to 90 degrees, e.g. 20 degrees, depending e.g. on the (intended) location of the sensor assembly 140 in the monitored space, on the (intended) installation height of the sensor assembly 140 and/or on the size of the monitored space.

Figure 4 illustrates a block diagram of some components of a sensor unit 141-j according to an example, where the sensor unit 141-j comprises a radar device 142-j for detecting one or more characteristics of objects in the respective monitoring direction. The sensor unit 141-j may comprise a light sensor 143-j for observing the ambient light level in the respective monitoring direction and/or a sound sensor 144-j for capturing one or more sound characteristics in the respective monitoring direction. In this regard, the respective radar devices 142-j included in the plurality of sensor units 141 may be jointly referred to as a plurality of radar devices 142. Along similar lines, the respective light sensors 143-j that may be included in the plurality of sensor units 141 may be jointly referred to as a plurality of light sensors 143 and the respective sound sensors 144-j that may be included in the plurality of sensor units 141 may be jointly referred to as a plurality of sound sensors 144.

Throughout the examples described in the foregoing and in the following, the sensor units 141-j is described as ones including respective radar devices 142-j. In another example, the radar devices 142-j may be replaced with respective (active) remote sensing devices of other type, such as respective lidar devices. Consequently, the respective radar beams of the radar devices 142-j (that are described in the following) generalize into monitoring beams of the remote sensing devices while the following examples concerning characteristics of the radar beams likewise generalize into respective characteristics of the monitoring beams, *mutatis mutandis.*

Along the lines described in the foregoing, each of the radar devices 142-j may be arranged to observe objects in the respective monitoring direction, thereby providing a multi-directional or omni-directional radar arrangement (depending on the extent of the overall range of directions). In this regard, an antenna of the radar device 142-j may be arranged in the sensor unit 141-j (and hence in the sensor assembly 140) such that a center axis of its radar beam is aligned with the monitoring direction of the sensor unit 141-j. A lateral monitoring range of the radar device 142-j may be defined via a beamwidth of the radar beam, wherein the beamwidth may be defined by a respective azimuthal beamwidth and/or a respective vertical beamwidth. The beamwidths of the respective radar beams of the radar devices 142-j may jointly cover the overall range of directions around the sensor assembly 140 in the reference plane without gaps therebetween, e.g. such that the radar beam of the radar device 142-j partially overlaps with respective radar beams of adjacent antennas. A suitable azimuthal beamwidth required for an individual radar device 142-j depends e.g. on the overall range of directions, on the number of radar devices 142-j included in the sensor assembly 140 and on the respective azimuthal beamwidths of the respective radar beams of the plurality of radar devices 142. In an example, the radar devices 142-j apply similar or substantially similar azimuthal beamwidths.

The possible inclination angle described in the foregoing may be especially relevant for operation of the radar devices 142-j in view of the vertical beamwidth of its radar beam. As an example in this regard, the inclination angle may be chosen in dependence of the vertical beamwidth of the radar device 142-j or, vice versa, the vertical beamwidth of the radar device 142-j may be chosen in view of the inclination angle, possibly further in consideration of the intended installation height of the sensor assembly 140 and/or the size of the monitored space. In a non-limiting example, the vertical beamwidth of the radar beams of the radar device 141-j may be in the range from 60 to 180 degrees, e.g. 90 degrees or 120 degrees.

Each of the radar devices 142-j may be provided as a respective radar operating at a Kₐ band or at a V band, i.e. at a frequency in a range from 24 to 75 GHz and hence at a wavelength from approximately four millimeters to approximately one centimeter. As further examples in this regard, the radar device 142-j may operate at 24 GHz or at 60 GHz. Frequencies within the above-mentioned range enable detection of objects within distance ranges that are applicable within indoor use while not penetrating walls or other fixed structures in the monitored space. Each of the radar devices 142-j may apply a pulse frequency that is (slightly) different from the pulse frequency applied by other radar devices 142-j of the sensor assembly 140 to enable the radar device 142-j to distinguish reflection of its own radar signal from reflections of radar signals of other radar devices 142-j of the sensor assembly 140.

Along the lines described in the foregoing, the sensor units 140-j may include the respective light sensors 143-j for observing light originating from the respective monitoring direction, thereby providing a multi-directional or omni-directional light sensing arrangement (depending on the extent of the overall range of directions). In case of the light sensor 143-j the respective monitoring direction may be considered as the direction in which the respective light sensor 143-j is most sensitive to incoming light, whereas the light sensor 142-j also receives light within in a range of directions centered around the respective monitoring direction.

Along the lines described in the foregoing, the sensor units 140-j may optionally include the respective sound sensors 144-j for capturing respective one or more sound characteristics in the respective monitoring direction, thereby providing a multi-directional or omni-directional sound sensing arrangement (depending on the extent of the overall range of directions). In case of the sound sensor 144-j the respective monitoring direction may be considered as the direction in which the respective sound sensor 144-j is most sensitive to incoming sounds, whereas the sound sensor 144-j also receives sounds within in a range of directions centered around the respective monitoring direction.

In addition to the radar device 142-j and the light sensor 143-j and the sound sensor 144-j described above, the sensor unit 141-j may comprise one or more further sensor devices of other type for observing respective environmental characteristics in the monitored space. In another example, such one or more further sensor devices may be provided in the sensor assembly 140 separately from the sensor units 141-j. Non-limiting examples of such further sensor devices comprise a carbon dioxide (CO₂) sensor for measuring respective CO₂ levels in the monitored space, a volatile organic compound (VOC) sensor for measuring respective levels of one or more VOCs in the monitored space, a humidity sensor for measuring respective humidity level in the monitored space, a temperature sensor for measuring temperature in the monitored space a pressure sensor for measuring air pressure level in the monitored space, a thermal camera for capturing thermal images of the monitored space.

Each of the one or more sensor devices of the sensor units 141-j may be arranged to provide the respective sensor data captured therein to the control portion 145 via a respective sensor signal. As non-limiting examples in this regard, the sensor units 141-j may be coupled to the control portion 145 via respective wired links and/or via a wired bus to enable transfer of the respective sensor signals from the sensor unit 141-j to the control portion and possibly also to enable transfer of control information from the control portion to the one or more sensors of the sensor unit 141-j.

The control portion 145 in the sensor assembly 140 may be provided by hardware means or by a combination of hardware means and software means, e.g. as an entity comprising a memory and a processor, where the memory comprises program code that is executable by the processor to control at least some aspects of operation of the sensor assembly 140. In this regard, the control portion 145 may be arranged to control at least some aspects of operation of the sensor unit 141-j and/or some of the sensor devices provided therein. Moreover, the control portion 145 may be arranged to configure at least one aspect of operation of the sensor assembly 140 and/or to control at least one aspect of light output from the luminaires 120-k of the lighting system 100 on basis of the sensor data obtained from the plurality of sensor units 141.

The control portion 145 has the knowledge regarding spatial relationship between the sensor unit 141-j and/or the one or more sensor devices therein with respect to other ones of the plurality of sensor units 141 and/or the one or more sensor devices therein. In this regard, the control portion 145 has the knowledge of the respective monitoring directions of the sensor units 141-j with respect to each other. Consequently, the control portion 145 has the knowledge that enables determining spatial relationship between respective environmental characteristics obtained via respective sensor signals originating from the respective sensor devices of the plurality of sensor units 141.

As an example pertaining to the control portion 145 controlling at least some aspects of operation of the sensor unit 141-j and/or one or more the sensor devices provided therein, the control portion 145 may be arranged to control the radar device 142-j to perform a scan according to a respective predefined schedule, e.g. at respective predefined time intervals and, consequently, receive a respective sensor signal from the radar device 142-j. The respective sensor signals received from the radar devices 142-j enable detection of respective locations of stationary objects in the monitored space as well as presence of any non-stationary (e.g. moving) objects in the monitored space. In this regard, the respective sensor signals obtained from the plurality of radar devices 142 enable the control portion 145 to detect respective directions and distances of one or more objects in the monitored space with respect to the position of the sensor assembly 140, where detectable objects include stationary objects and non-stationary (e.g. moving) objects.

Consequently, as an example, the control portion 145 may apply the sensor signals obtained from the plurality of radar devices 142, for example, to detect respective positions of one or more walls of the monitored space and/or to detect respective positions of one or more other structural elements included in the monitored space. In another example, the control portion may apply the sensor signals obtained from the plurality of radar devices 142 to provide occupancy detection, e.g. to detect presence of one or more persons in the monitored space and/or to determine or estimate number of persons residing in the monitored space. Moreover, in some scenarios the respective sensor signals received from the plurality of radar devices 141 enable providing the occupancy detection separately for the respective monitoring directions with respect to the sensor assembly 140, which may be referred to as directional occupancy detection.

As further examples pertaining to the control portion 145 controlling at least some aspects of operation of the sensor unit 141-j and/or some of the sensor devices provided therein, the control portion 145 may be arranged to read the respective sensor signals provided by the plurality of light sensors 143 (if present in the sensor units 141-j) according to a respective predefined schedule, e.g. at respective predefined time intervals to record respective light levels in the monitored space and/or to capture respective one or more audio parameters based on the respective sensor signals provided by the plurality of sound sensors 144 (if present in the sensor units 141-j) according to a respective predefined schedule, e.g. at respective predefined time intervals. Consequently, the recorded light levels may enable the control portion 145 to detect respective light levels (and/or changes thereof) in various directions with respect to the sensor assembly 140, whereas the captured audio parameters may enable the control portion 145 to detect sound events occurring in various directions with respect to the sensor assembly 140. Yet further, the control portion 145 may be arranged to read or otherwise acquire respective information provided in the respective sensor signals from the one or more further sensor devices possibly provided in the sensor units 141-j and make use of this information in configuring operation of the sensor assembly 140 and/or in controlling the at least one aspect of light output from the luminaires 120-k.

The communication portion 146 in the sensor assembly 140 may enable wired and/or wireless communication with other elements of the lighting system 100, e.g. with the luminaires 120-k as well as with the gateway 150 (if present). In case wireless communication is applied in this regard, the communication portion 146 may comprise a wireless transceiver that is capable of communicating with respective wireless transceivers in other elements of the lighting system 100. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy (LE), ZigBee, WLAN/Wi-Fi according to an IEEE 802.11 family of standards, etc. Further examples include infrared communications and other non-radio-based short-range communication techniques. The choice of the communication technique and network topology for a specific implementation of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth or Bluetooth LE Mesh networking protocol known in the art. In case wired communication is applied between elements of the lighting system 100, the communication in this regard may be provided via a wired bus using a lighting control protocol, such as the Digital Addressable Lighting Interface (DALI) specified in a series of technical standards IEC 62386, whereas the communication portion 146 may provide a communication interface arranged for communication according to the applicable lighting control protocol. Further examples of providing wired communication between elements of the lighting system 100 include Power over Ethernet (PoE) and packet switched communication networks such as Internet Protocol (IP) based networks.

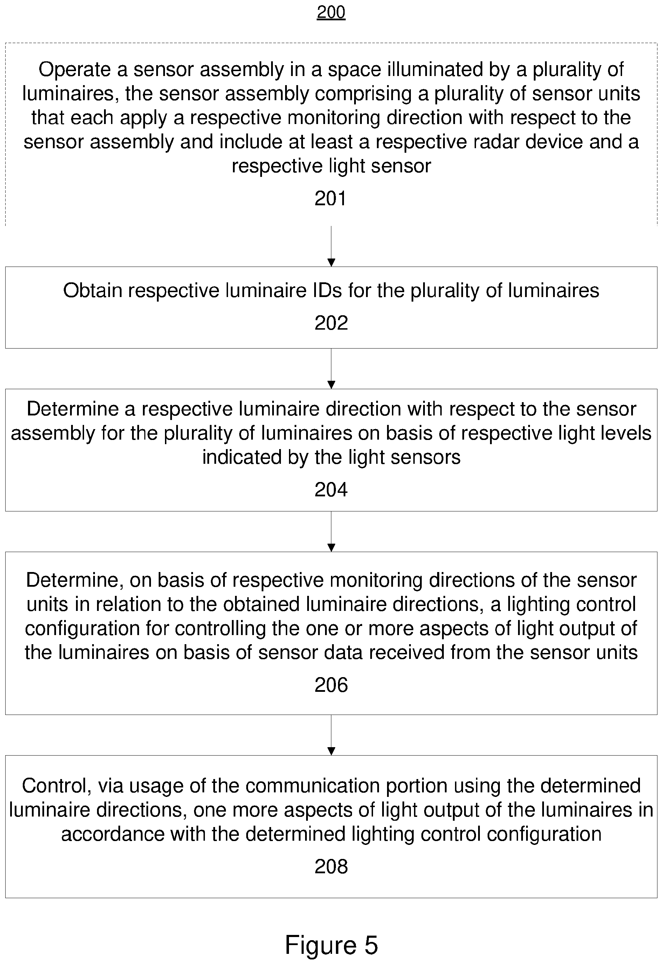

Operation of the control portion 145 with respect to configuring the sensor assembly 140 to control one or more aspects of light output of the lighting system 100 and, subsequently, controlling the one or more aspects of the light output of the luminaires 120-k may be provided via operation of a method 200 that is illustrated by the flowchart depicted in Figure 5.As shown in block 201, a starting point for the method comprises presence and operation of the sensor assembly 140 in the monitored space illuminated by the luminaires 120-k. From this starting point, the method 200 comprises obtaining respective luminaire identifications (IDs) for the luminaires 120-k, as indicated in block 202, and determining a respective luminaire direction with respect to the sensor assembly 140 for the luminaires 120-k on basis of respective light levels indicated by the light sensors 143-j, as indicated in block 204. The method 200 further comprises determining, on basis of respective monitoring directions of the sensor units 141-j in relation to the determined luminaire directions, a lighting control configuration for controlling the one or more aspects of light output of the luminaires 120-k on basis of sensor data received from the sensor units 141-j. Moreover, the method 200 further comprises controlling, via usage of the communication portion 146 using the determined luminaire directions, the one more aspects of light output of the luminaires 120-k in accordance with the determined lighting control configuration, as indicated in block 208. The operations described with references to blocks 202 to 208 may be varied in a number of ways, for example as described in examples provided in the foregoing and/or in the following.

Hence, operations pertaining to block 202 to 206 may be considered as ones carried out for configuring the sensor assembly 140 to control the one or more aspects of light output of the luminaires 120-k, whereas operations pertaining to block 208 may be considered as ones carried out for controlling the one or more aspects of the light output. In this regard, determination of the lighting control configuration may be carried out based on sensor signals received from the light sensors 143-j during a configuration period, whereas the lighting control carried out in accordance with the determined lighting control configuration may take place after completion of the configuration period and it may depend on sensor data received after completion of the configuration period.

As an example, the configuration of the sensor assembly 140 for lighting control (cf. block 202 to 206) may be initiated e.g. upon installing, configuring or reconfiguring the sensor assembly 140 for operation as part of the lighting system 100, whereas in another examples the configuration procedure may be initiated in response to the sensor assembly 140 receiving operating power (after a period of not receiving the operating power) and/or in response to the sensor assembly 140 receiving a command in this regard e.g. via a user interface (Ul) provided for the sensor assembly 140 and/or via the communication portion 146. In the latter example, the command may be received, for example, from the server 160 via the gateway 150.

Referring back to operations pertaining to block 202, according to an example, the aspect of obtaining the luminaire IDs may comprise the control portion 145 making use of the communication portion 146 to observe communication within the lighting system 100 in order to obtain knowledge of respective luminaire IDs of the luminaires 120-k. Such communication may comprise communication sent to the luminaires 120-k and/or communication transmitted from the luminaires 120-k, whereas the communication portion 146 may be able to receive or intercept such messages even though the messages are not addressed to the sensor assembly 140. Relevant communication in this regard may comprise, for example, lighting control commands or messages addressed to the luminaires 120-k and/or status messages transmitted from the luminaires 120-k in course of operation of the lighting system 100 under control of one or more lighting control entities other than the control portion 145 of the sensor assembly 140. Such messages typically include the luminaire ID of an originator of the message and/or the luminaire ID of the recipient(s) of the message.

In another example, the aspect of obtaining the luminaire IDs may comprise the control portion 145 carrying out a luminaire ID detection procedure. This may comprise, for example, the control portion 145 using the communication portion 146 to broadcast a request for each of the plurality of luminaries 120 to transmit a response indicating their respective luminaire IDs and to receive the respective responses from the plurality of luminaires 120.

The above examples pertaining to acquisition of the luminaire IDs enable the control portion 145 to obtain knowledge of the luminaire IDs applied in the lighting system 100 without necessarily associating the obtained luminaire IDs with the respective luminaires 120-k of the monitored space. Nevertheless, the acquisition of the luminaire IDs enables the control portion 145 to carry out at least a generic lighting control in terms of switching or keeping on the respective light output of the luminaires 120-k, switching off the respective light output of the luminaires 120-k and/or adjusting the respective light output of the luminaires 120-k at a desired level. Consequently, with access to the respective luminaire IDs of the luminaires 120-k of the lighting system 100 (even without the knowledge of locations of the respective luminaires 120-k in the monitored space) the control portion 145 may set up an initial lighting control configuration that defines controlling the respective light output of the luminaires 120-k on basis of sensor data received from the radar devices 142-j. As an example in this regard, such lighting control configuration may define one or more lighting control actions that may include, for example, one or more of the following:
- one of switching on or keeping on the light output of the plurality of luminaires 120 in response to the respective sensor data from one or more of the plurality of radar devices 142 indicating occupancy in the monitored space,
- switching off the light output of the plurality of luminaires 120 in response to the respective sensor data from none of the plurality of radar devices 142 indicating occupancy in the monitored space,
- adjusting the light intensity level of the light output of the plurality of luminaires 120 in dependence of light levels indicated in the respective sensor data from one or more of the plurality of light sensors 143 so as to keep the light level in the monitored space at or close to a target light level.

The exemplifying lighting control actions outlined above may make use of one or more lighting control parameters, for example, a default light intensity to be applied when switching on the light output of the luminaire 120-k, a switch-off delay and/or a dimming pattern to be applied when switching off the light output of the luminaire 120-k and/or a target light level for adjusting the light intensity level of the light output of the luminaire 120-k in dependence of the observed light level in the monitored space. Moreover, each of the exemplifying lighting control actions above is carried out in dependence of sensor data from one or more of the sensor units 141-j of the sensor assembly 140, e.g. in dependence of respective sensor data from one or more radar devices 141-j and/or in dependence of sensor data from on one or more light sensors 143-j. In this regard, a lighting control configuration may define respective values for one or more lighting control parameters to be applied by certain lighting control actions and/or define respective sensor unit(s) 141-j to be applied as input for carrying out certain lighting control actions.

During the configuration period, in other words during a time period during which the sensor data for determination of the lighting control configuration period is being collected, the control portion 145 may control the one or more aspects of light output of the lighting system 100, for example, according to the initial lighting control configuration described above, according to a(nother) previously determined lighting control configuration, or according to a predefined default lighting control configuration.

Referring back to operations pertaining to block 204, the aspect of determining respective directions of the luminaires 120-k with respect to the sensor assembly 140, implicitly, also serves to determine the location of the sensor assembly 140 with respect to respective locations of the luminaires 120-k. In this regard, the aspect of the control portion 145 learning the respective directions of the luminaires 120-k may be carried out on basis of respective light levels indicated via the respective sensor signals received from the light sensors 143-j. The direction of the luminaire 120-k with respect to the sensor assembly 140 may be referred to, in short, as a luminaire direction (with respect to the sensor assembly 140).

According to an example, the detection of the luminaire directions may be based on respective sensor signals received from the light sensors 143-j. In this regard, determining the direction of a luminaire 120-k with respect to the sensor assembly 140 may be based on respective changes in the light level indicated by the light sensors 143-j upon switching the light output of the luminaire 120-k on or off. Consequently, determination of the respective luminaire directions with respect to the sensor assembly 140 for the plurality of luminaires 120 may comprise:
determining and recording the respective change in the light level indicated by each of the light sensors 143-j upon switching the light output of the respective luminaire 120-k on and/or off; and
determining the respective luminaire direction on basis of the respective changes in the light level determined for the light sensors 143-j and their respective monitoring directions.

As an example in this regard, the light sensor 143-j that indicates the largest change in light level upon switching the light output on and/or off may be considered as the one having its monitoring direction closest to the luminaire direction of the luminaire 120-k, which monitoring direction may be hence considered as an applicable estimate of the direction of the luminaire 120-k with respect to the sensor assembly 140. Consequently, determination of the respective luminaire directions with respect to the sensor assembly 140 for the plurality of luminaires 120 may comprise identifying the light sensor 143-j that indicates the largest change in light level upon switching the respective luminaire 120-k on and/or off and determining the respective luminaire direction as the monitoring direction of the sensor unit 141-j that includes the identified one of the light sensors 143-j.

As described in the foregoing, the acquisition of the luminaire IDs (cf. block 202) does not necessarily associate them with the respective luminaires 120-k of the monitored space. However, with the knowledge of the luminaire IDs belonging to yet-unspecified ones of the luminaires 120-k, the control portion 145 may carry out a dedicated luminaire detection procedure to detect respective luminaire directions with respect to the sensor assembly 140 using the procedure(s) described above, thereby associating the luminaire IDs available in the control portion 145 with respective luminaire directions. As an example in this regard, the control portion 145 may go through the obtained luminaire IDs, one luminaire ID at a time, by transmitting a lighting control message that instructs the luminaire 120-k with the respective luminaire ID to switch on its light output followed by transmitting a lighting control message that instructs the luminaire 120-k with the respective luminaire ID to switch off its light output and using each of the light sensors 143-j to measure and record the respective change in the light level resulting from switching on and/or off the respective one of the luminaires 120-k, thereby enabling determination of the respective luminaire directions using the procedure(s) described above and association of the luminaire IDs with the respective luminaires 120-k. The luminaire detection procedure is preferably carried out during a time period when the monitored space is unoccupied and/or when the ambient light level is low (e.g. during nighttime). In an example, the luminaire detection procedure may commence or be preceded by an initiation procedure, that involves the control portion 145 transmitting, for each of the obtained luminaire IDs, a respective lighting control message that instructs the luminaire 120-k having the respective luminaire ID to switch off its light output, thereby starting the luminaire detection procedure from a situation where all luminaires 120-k are switched off.

In a variation of the above-described example, instead of considering (only) the luminaire IDs explicitly obtained at the control portion 145 (e.g. via monitoring the communication within the lighting system 100), the control portion 145 may go through all possible luminaire IDs (e.g. addresses) enabled by the communication protocol applied in the lighting system 100. As an example in this regard, in case the communication between elements of the lighting systems employs the DALI protocol, the control portion 145 may go through the full address space enabled by the employed DALI protocol.

In another example, the luminaire detection may rely on a respective predefined light intensity pattern assigned to the luminaires 120-k, which may be referred to as a 'signature' assigned to the respective luminaire 120-k, which is different from respective signatures assigned to the other ones of the plurality of luminaires 120. Herein, the signature means a period of light intensity changes according to a predefined pattern, which enables an entity equipped with a light sensor to detect the signature of a certain luminaire 120-k and, consequently, identify the observed light as one originating from the certain luminaire 120-k. The luminaires 120-k may be configured to change their light output according to their signature, for example, each time they switch on their light output and/or in response to a request received from another entity of the lighting system 100. As an example of making use such signatures in luminaire detection, the control portion 145 may go through the luminaire IDs obtained therein via observing the communication within the lighting system 100, one luminaire ID at a time, by transmitting a lighting control message that instructs the luminaire 120-k to change its light output according to the signature assigned therefor, and using each of the light sensors 143-j to measure and record the respective change in the light level resulting from application of the signature by the respective luminaire 120-k, thereby enabling determination of the respective luminaire directions using the procedure(s) described above and association of the luminaire IDs with the respective luminaires 120-k.

In a further example, a dedicated luminaire detection procedure may be omitted and the control portion 145 may measure and record the respective changes in the light level observed by each of the light sensors 143-j upon switching on or off the light output of the respective luminaires 120-k in the course of operation of the lighting system 100 under control of one or more lighting control entities other than the control portion 145 of the sensor assembly 140 to enable determination of the respective luminaire directions using the procedure(s) described above. In this approach, the control portion 145 does not need to know the luminaire IDs applied within the lighting system 100 in advance but it may obtain the luminaire IDs via observing communication within the lighting system 100. In particular, the control portion 145 may identify a lighting control command instructing a luminaire having a certain luminaire ID to switch its light output on or off or identify a status message indicating a luminaire having the certain luminaire ID having switched its light output on or off and associate the certain luminaire ID to the luminaire direction determined on basis of the respective changes in the light level measured and recorded upon identifying the lighting control command or the status message.

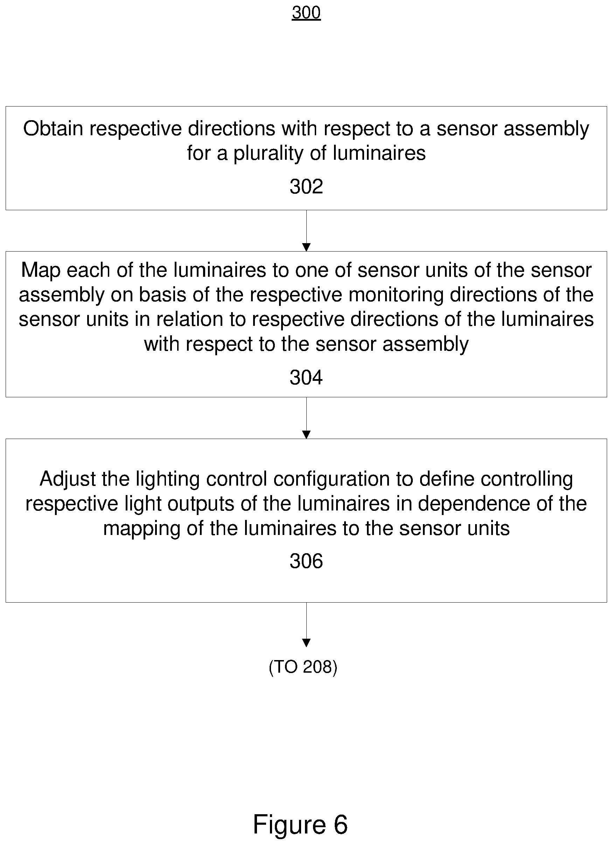

Referring back to operations pertaining to block 206, the aspect of determining the lighting control configuration on basis of the respective monitoring directions of the sensor units 141-j in relation to the respective luminaire directions may comprise carrying out, for example, according to a method 300 that is illustrated by a flowchart of Figure 6. The method 300 proceeds from obtaining the respective luminaire directions with respect to the sensor assembly 140 for the luminaires 120-k, as indicated in block 302. The method 300 further comprises, mapping each of the luminaires 120-k to one of the sensor units 141-j on basis of the respective monitoring directions in relation to the respective directions of the luminaires 120-k with respect to the sensor assembly 140, as indicated in block 304, and adjusting the lighting control configuration to define controlling respective light outputs of the luminaires 120-k in dependence of the mapping of the luminaires 120-k to the sensor units 141-j, as indicated in block 306. The operations described with references to blocks 302 to 306 may be varied in a number of ways, for example as described in examples provided in the foregoing and/or in the following

Referring back to operations pertaining to block 302, as an example, the aspect of obtaining the respective luminaire directions for the luminaires 120-k may be carried out as described in the foregoing in context of block 202 pertaining to the method 200.

Referring back to operations pertaining to block 304, the aspect of mapping each of the luminaires 120-k to one of the sensor units 141-j may be carried out based on respective directions of the luminaires 120-k with respect to the sensor assembly 140 and the respective monitoring directions of the sensor units 140-j, e.g. such that each luminaire 120-k is mapped to that one of the sensor units 141-k whose monitoring direction is closest to the luminaire direction determined for the respective luminaire 120-k.

Referring back to operations pertaining to block 306, the aspect of adjusting the lighting control configuration for controlling respective light outputs of the luminaires 120-k in dependence of the mapping of the luminaires 120-k to the sensor units 141-j serves to enable lighting control that accounts for direction of occupancy detected in the monitored space. Along the lines described in the foregoing, the lighting control may be provided via using one or more lighting control actions that may apply one or more lighting control parameters and/or that may be carried out in dependence of sensor data from one or more of the sensor devices of the sensor assembly 140. In this regard, application of sensor data from the radar devices 143-j in dependence of the mapping between the luminaires 120-k and the sensor units 141-j may comprise application of different values for one or more lighting control parameters in dependence of this mapping, thereby providing directional lighting control. An example in this regard involves adjusting the lighting control configuration to define application of different (default) light intensity levels in context of lighting control actions that pertain to switching or keeping on the light output from the luminaires 120-k e.g. in the following manner:
- applying a first light intensity level for the respective light output of those luminaires 120-k that are mapped to a sensor unit 141-j including a radar device 142-j that indicates occupancy the monitored space, and
- applying a second light intensity level for the respective light output of those luminaires 120-k that are not mapped to a sensor unit 141-j including a radar device 142-j that indicates occupancy in the monitored space, wherein the second light intensity level is different from the second light intensity level.

Hence, the above approach may be applied to adjust the light level across the monitored space such that light level in those parts of the monitored space (e.g. in those directions with respect to the sensor assembly 140) that are currently occupied is set differently from the light level in those parts of the monitored space (e.g. in those directions with respect to the sensor assembly 140) that are currently unoccupied. Typically, the second light intensity level is lower than the first light intensity level, thereby providing a higher light level in the currently occupied parts of the monitored space in comparison to the currently unoccupied parts of the monitored space.

In another example pertaining to adjustment of the lighting control configuration in context of block 306 involves the control portion (145) adjusting respective light intensity levels to be applied in the respective light outputs of the luminaires 120-k in dependence of the respective light levels indicated in the respective sensor data obtained from the light sensors 143-j in accordance with the mapping between the luminaires 120-k and the sensor units 141-j. As an example in this regard, the lighting control action that pertains to such adjustment of light level may be carried out differently for the luminaires 120-k that are located in different directions with respect to the sensor assembly 140, e.g. such that light intensity level adjustment that aims at providing light level that is at or close to the target light level is provided for a given luminaire 120-k in dependence of the light level indicated in the respective sensor data received from the light sensor 143-j included in the sensor unit 141-j that has the given luminaire 120-k mapped thereto. Consequently, the light intensity level adjustment in this regard may be carried out separately for each of the monitoring directions of the sensor unit 141-j. In this regard, as an example, the target light level may be the same for all monitoring directions, whereas in another example different target light levels may be applied for different monitoring directions, e.g. such that the target light applied for a monitoring direction for which the respective radar device 142-j currently indicates occupancy is higher than the target level applied for a monitoring direction for which the respective radar device 142-j does not currently indicate occupancy.

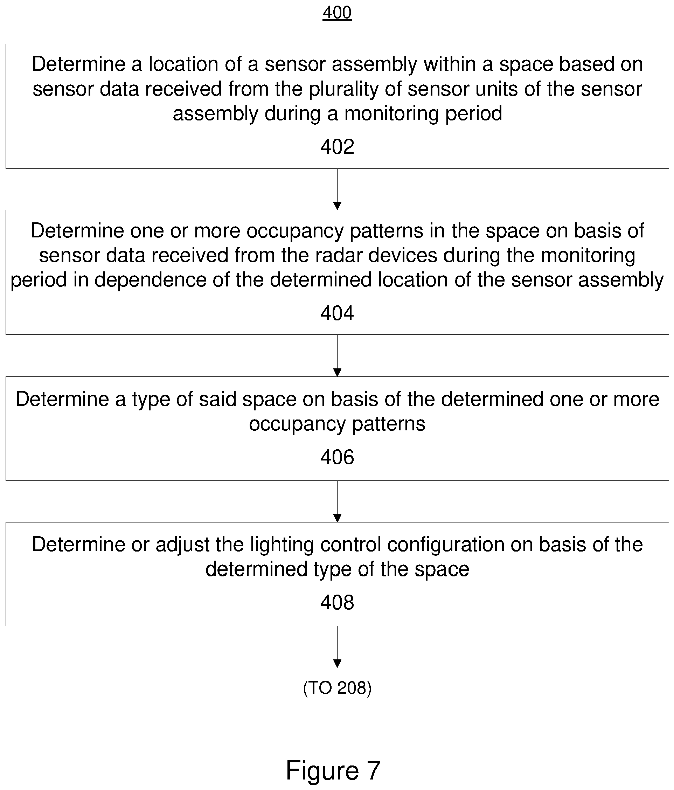

In a further example, the control portion 145 may operate to further adjust at least some aspects of the lighting control configuration on basis of the location of the sensor assembly 140 within the monitored space. This may be provided, for example, via operation of a method 400 that is illustrated by the flowchart depicted in Figure 7. The method 200 comprises determining a location of the sensor assembly 140 within the monitored space on basis of sensor data received from the plurality of radar devices 142-j during a monitoring period, indicated in block 402, and determining one or more occupancy patterns in the monitored space on basis of the sensor data received from the radar devices 142-j during the monitoring period in dependence of the determined location of the sensor assembly 140, as indicated in block 404. The method 400 further comprises determining a type of the monitored space on basis of the determined one or more occupancy patterns, as indicated in block 406, and adjusting or determining the lighting control configuration on basis of the determined type of the monitored space, as indicated in block 408. The operations described with references to blocks 402 to 408 may be varied in a number of ways, for example as described in examples provided in the foregoing and/or in the following.

Referring back to block 402, the aspect of determining the location of the sensor assembly 140 within the monitored space may comprise determining, on basis of the respective sensor signals received from the of radar devices 142-j, respective locations of one or more stationary objects in the monitored space with respect to the location of the sensor assembly 140 and/or the location of the sensor assembly 140 with respect to the respective locations of the one or more stationary objects in the monitored space. Herein, the one or more stationary objects in the monitored space may comprise one or more walls of the monitored space and/or one or more other fixed structures within the monitored space. The location determination may further involve determining a shape and/or size of the monitored space on basis of the respective locations of the one or more stationary objects in the monitored space, e.g. on basis of the one respective locations of the one or more walls of the monitored space in relation to the location of the sensor assembly 140.

Referring back to block 404, the aspect of determining the one or more occupancy patterns in the monitored space may comprise determining a respective time series of occupancy indications for a plurality of locations in the monitored space on basis of the respective sensor data received from the radar devices 142-j. In this regard, the knowledge of the location of the sensor assembly 140 with respect to the walls and/or other stationary objects of the monitored space enables using the respective sensor signals from the radar devices 142-j (also) for determination of the occupancy patterns with respect to the monitored space. Hence, each of the time series of occupancy indications indicate occupancy status (occupancy or non-occupancy) in the respective location of the monitored space as a function of time. Consequently, the occupancy patterns enable, for example, detecting any movement to the monitored space, from the monitored space and/or through the monitored space, detecting or deriving residence times in the monitored space as well as detecting or deriving the number of occupants in the monitored space and their respective locations within the monitored space over time.

Referring back to block 406, the occupancy patterns derived for the monitored space may be applied as an indication of the type of the monitored space. In this regard, there is typically a strong correlation between a purpose served by the monitored space and the movement of people to/from/through the monitored space as well as their residence times and locations of residence within the monitored space. As an example in this regard, the respective occupancy patterns for a closet or a small storage room, for a corridor or a staircase, for an office room, for a meeting room and for an open office space each have different characteristics. Consequently, determination of the one or more occupancy patterns in the monitored space may enable the control portion 145 to learn, based on the sensor data obtained from the plurality of radar devices 142, the type of the monitored space. As an example in this regard, the aspect of determining the type of the monitored space may comprise, for example, the following:
- identifying, from a plurality of predefined occupancy pattern profiles that each represent a respective space type, one that is closest to the determined one or more occupancy profiles, and
- determining the type of said space is the space type represented by the identified one of the predefined occupancy pattern profiles.

As an example In this regard, each of the plurality of predefined occupancy pattern profiles may represent one of the following space types: an office room, an open office space, a meeting room, a classroom, a lobby, a corridor, a staircase, a waiting room, a storage room (e.g. a closet), a warehouse, etc.

Still referring to determination of the type of the monitored space (cf. block 406), the determination may comprise determining a shape and/or size of the monitored space. The shape and/or size of the monitored space may be derived, for example, on basis of the respective locations of one or more stationary objects in the monitored space with respect to the location of the sensor assembly 140, e.g. the one or more walls of the monitored space and/or one or more other fixed structures within the monitored space. In this regard, the shape and/or size of the monitored space serves as a further indication of the type and/or purpose of the monitored space.

Referring back to block 408, the aspect of determining the lighting control configuration for the sensor assembly may rely on the control portion 145 having learned the type of the monitored space and it may comprise adopting a default lighting control configuration assigned for the space type determined for the monitored space. In this regard, spaces serving different purposes have different requirements for the lighting control therein in order to provide sufficient lighting performance while ensuring low energy consumption. As an example in this regard, e.g. a closet or a small storage room, a corridor or a staircase, an office room, a meeting room and an open office space may each have different requirements with respect to at least one of the following: a suitable light intensity to be applied when switching on the light output of the luminaires 120-k, a suitable switch-off delay to be applied when switching off the light output of the luminaires 120-k, a dimming pattern to be applied when switching off the light output of the luminaires 120-k, and a target light level for adjusting the light intensity level of the light output of the luminaire 120-k in dependence of the observed light level in the monitored space (to extent these aspects of lighting control are applicable to the monitored space).

Hence, each of the plurality of space types may have a respective default lighting control profile assigned thereto, whereas each default lighting control profile may define respective values for one or more lighting control parameters that are applicable for the respective default lighting control profile. Consequently, adopting a certain default lighting control profile may comprise adopting the one or more lighting control parameters defined in the certain default lighting control profile. Examples of such lighting control parameters are described in the foregoing and they may comprise one or more of the following: a default light intensity to be applied when switching on the light output of the luminaires 120-k, a default switch-off delay to be applied when switching off the light output of the luminaires 120-k, a default dimming pattern to be applied when switching off the light output of the luminaires 120-k, a default target light level for adjusting the light intensity level of the light output of the luminaire 120-k in dependence of the observed light level in the monitored space. Each of the considered lighting control parameters may be applicable for each the plurality of luminaires 120 of the lighting system 100, whereas in another example respective (at least partially different) lighting control parameters may be defined for each of the luminaires 120-k.

As an example concerning differences between the default lighting control configurations, at least some of the lighting control parameters defined for a first default lighting control configuration may be set to different values in comparison to those defined for a second default lighting control configuration, thereby accounting for different lighting requirements of spaces of different type (e.g. an office room and a storage room). As an example in this regard, the first lighting control configuration (assigned e.g. to a space designated as an office room) may define a higher default light intensity, a longer default switch-off delay and/or a higher default target light level in comparison to respective default lighting control parameters of the second lighting control configuration (assigned e.g. to a space designated as a storage room).

According to an example, the control portion 145 may apply the lighting control parameters adopted via selection of one of the default lighting control profiles as such in the course of operation of the sensor assembly 140 and the lighting system 100. In another example, additionally or alternatively, the control portion 145 may apply the lighting control parameters adopted via selection of one of the default lighting control profiles as the starting point for a further learning procedure in order to adapt respective values of at least some of the lighting control parameters in accordance with the respective sensor data received from the plurality of sensor units 140. In this regard, the further learning procedure may rely on sensor data obtained during the monitoring period and/or on sensor data obtained after the monitoring period.

According to an example, the method 400 may further comprise determining the location of the monitored space, i.e. the location of space in which the sensor assembly 140 is being operated, in view of the determined shape and size of the monitored space. In particular, determination of the location of the monitored space may involve identifying the monitored space as a certain one of the plurality of spaces of the building in which the sensor assembly 140 is being operated.

As an example in this regard, the control portion 145 may obtain a digital floorplan of the building in which the monitored space is located, wherein the floorplan may define the plurality of the spaces in the building and indicate respective intended locations of one or more sensor assemblies within the building. Moreover, the determination of the location of the monitored space within the building may comprise identifying, in the floorplan, a space of the plurality of spaces defined therein that has a shape and size matching those of the monitored space and that includes an intended location of a sensor assembly. The floorplan may be prestored and hence readily available for the control portion 145 in the sensor assembly 140, whereas in another example the control portion 145 may receive the floorplan e.g. from the server 160 via the gateway 150.

Still referring to identification of the monitored space as one of the plurality of spaces in the building, the identification may further aim at detecting respective positions of one or more openings temporarily appearing in the one or more walls of the monitored space based on the respective sensor signals received from the radar devices 142-j. In this regard, such an opening detected in the walls of the monitored space may be considered to represent a doorway to/from the monitored space. The respective positions of one or more doors in the walls of the monitored space may be applied as further input in identifying the location of the monitored space in the building, e.g. by identifying, in the floorplan, a space of the plurality of spaces that has a shape and size matching those of the monitored space and that has positions of one or more doors matching those determined for the monitored space.

Still referring to identification of the monitored space as one of the plurality of spaces in the building, the identification may be carried out further on basis of the respective light levels indicated by the light sensors 143-j. As an example in this regard, assuming presence of at least one window to the monitored space to allow daylight entering therein, the control portion 145 may track changes in the respective light levels indicated by the plurality of light sensors 143 over time. By tracking the light level changes for at least one day, the control portion 145 may match the tracked light level changes against the time of the day to determine orientation of the sensor assembly 140 with respect to a reference direction, e.g. with respect to north or to another one of the cardinal directions. Alternatively, the sensor assembly may be intended for installation into a predefined orientation with respect to the reference direction, thereby making the orientation of the sensor assembly with respect to the reference direction implicit. An indication of the orientation of the sensor assembly 140 with respect to the reference direction may be applied as further input in identifying the location of the monitored space in the building.

The aspect of identifying the location of the monitored space in the building may be followed by the control portion 145 providing an indication of the determined location of in the building, e.g. an indication of the identified space among the plurality of spaces of the building, to the building automation system. As an example in this regard, the control portion 145 may transmit such an indication via the gateway device 150 to the HVAC system 170, which may map the sensor assembly 140 as one operated in the identified space of the building. Consequently, the sensor assembly 140 may provide at least part of the sensor data obtained therein, e.g. via the gateway device 150, to the HVAC system 170 (e.g. the building automation server therein) to enable the HVAC system 170 to control at least some aspects of one or more other services or functionalities available in the monitored space.

According to an example, the lighting control according to operations described with references to block 208 may be carried out by the control portion 145 transmitting, via the communication portion 146, respective lighting control commands and/or lighting control messages to the luminaires 120-k via the communicative couplings provided between elements of the lighting system 100 and, hence, between the sensor assembly 140 and the plurality of luminaires 120. The lighting control commands or messages issued from the sensor assembly 140 may be addressed to intended one(s) of the luminaires 120-k using knowledge of the respective luminaire IDs that may be obtained in the course of operation of the sensor assembly 140. The lighting control actions according to the lighting control commands or messages sent from the sensor assembly may complement and/or at least partially override lighting control provided by one or more lighting control entities other than the control portion 145 of the sensor assembly 140.

Referring back to the plurality of sound sensors 144, the control portion 145 may be arranged to apply respective sensor data received from the sound sensors 144-j as further input for occupancy detection in the monitored space. As an example in this regard, in a scenario where none of the radar devices 142-j indicates occupancy in the monitored space, the occupancy status (occupancy or non-occupancy) in the monitored space may be further evaluated based on the respective audio parameters captured by the sound sensors 144-j: respective audio parameters received from any of the sound sensors 144-j exhibiting a predefined and/or a repeating pattern may be considered as an indication of occupancy in the monitored space. As non-limiting examples in this regard, a sound pressure level exceeding a predefined threshold and/or a sound event exhibiting predefined characteristics with respect to its duration and/or spectral characteristics may be considered as an indication of occupancy in the monitored space even though the radar devices 142-j fail to detect occupancy in the space. Moreover, the respective audio parameters obtained from the sound sensors 144-j may be further applied at the control portion 145 to detect a direction of the sound with respect to the monitoring portion, whereas the direction of sound may be applied as an indication occupancy in the detected direction. As an example in this regard, the direction of the sound may be determined based on relative sound levels (e.g. sound energies) across the sound sensors 144-j (and hence across respective monitoring directions), where the respective monitoring direction of the sound sensor 144-j indicating the highest sound level may considered to represent the direction of the sound.

Referring back to operations pertaining to blocks 202 and 302, in a scenario where a wireless communication medium as applied to provide the communicative couplings between elements of the lighting system 100, the operations pertaining to block 202, 302 may further comprise estimating respective luminaire distances, i.e. distances between the sensor assembly 140 and the luminaires 120-k, based on signal strength of status messages received at the sensor assembly 140 from the luminaires 120-k. As an example in this regard, the control portion 145 (or the communication portion 146) may derive a respective received signal strength indication (RSSI) for messages received from the luminaires 120-k, and the respective RSSIs derived from the luminaires 120-k may serve as indications of their relative distances from the sensor assembly 140. As described in the foregoing, a status messages transmitted from a certain luminaire 120-k comprises the luminaire ID of the certain luminaire, thereby directly enabling the control portion 145 to associate the luminaire ID with the respective luminaire direction and with respective distance from the sensor assembly 140.

The control portion 145 may apply the luminaire distance estimation described above for controlling the light output from the luminaires 120-k at further accuracy by complementing the direction lighting control described in the foregoing with references to block 208 to additionally account for the luminaire distances. Since the radar devices 142-j enable detecting both the direction and distance of objects that are in the monitored space, the knowledge of both the luminaire directions and the luminaire distances enables spatial lighting control where application of different lighting levels for occupied and unoccupied parts of the monitored space does not only consider respective directions of these parts with respect to the sensor assembly 140 but also considers their distance to the sensor assembly 140.

In an example, the building in which the sensor assembly 140 is operated may comprise one or more further sensor assemblies. In this regard, a further sensor assembly may be located in the same space with the sensor assembly 140 (e.g. in different parts of an open office space) or in another space of the building (e.g. a room adjacent to one in which the sensor assembly 140 is located). In a scenario, the radar devices 142-j of the sensor assembly may apply radar signals that apply a pulse frequency that is different from that applied by the radar devices of the further sensor assemblies. Such application of different pulse frequencies enables the radar devices 142-j of the sensor assembly 140 to distinguish reflections of their own radar signals from respective radar signals originating from radar devices of the further sensor assemblies. Moreover, the difference in radar signal pulse frequency also enables detection of presence of any further sensor assemblies in the operating environment of the sensor assembly 140: in case any of the radar devices 142-j of the sensor assembly 140 receives a radar signal employing a pulse frequency different from that applied in its own radar signal, this serves as an indication of presence of a further sensor assembly in the operating environment of the sensor assembly 140. Non-limiting examples of making use of such information include the following:
- The knowledge of presence of a further sensor assembly in the same space with the sensor assembly 140 or in a space adjacent to that in which the sensor assembly 140 is operated may further assist identification of the space of the building in which the sensor assembly 140 located;
- A scenario where the radar devices 142-k of the sensor assembly 140 is only temporarily able to receive the radar signal from a further sensor assembly suggests that there is a door separating the respective spaces in which the sensor assembly 140 and the further sensor assembly are located. Consequently, the knowledge of the door separating these two spaces may further assist identification of the space of the building in which the sensor assembly 140 located, whereas visibility or non-visibility of the radar signal from the further sensor may, additionally or alternatively, serve as an indication of the door between these two spaces being open or closed, respectively.
- To follow up the previous point, the knowledge with respect to the door to the monitored space being open or closed may be applied for various purposes, for example to one or more of the following: switching off the light output from the luminaires 120-k in case the door is closed and the sensor data indicates non-occupancy in the monitored space; switching off the light output from the luminaires 120-k using a different switch-off delay and/or different dimming curve in dependence of the door being open or closed when the sensor data indicates a change from occupancy to non-occupancy in the monitored space (e.g. shorter switch-off delay and/or faster dimming of light output if the door is closed); issue an alert (e.g. via the gateway device 150 to the server device 160) in case the door is open and the sensor data indicates non-occupancy in the monitored space; issue an alert in response to door being continuously closed while the sensor data indicates a change from non-occupancy to occupancy in the monitored space.

According to an example, the control portion 145 may be arranged to track the occupancy information obtained via the sensor data received from the plurality of radar devices 142 over time in order to learn typical occupancy patterns (e.g. movement patterns) in the monitored space. As an example in this regard, the control portion 145 may learn that after a period of non-occupancy the first occupancy is observed based on the radar device 142-j arranged for observing a certain monitoring direction with respect to the sensor assembly 140. Consequently, when no occupancy is detected in the monitored space, the control portion 145 may keep only the radar device 142-j that is observing the certain monitoring direction in an active state while the other ones of the plurality of radar devices 142 may be kept in a stand-by state (or they may be controlled to perform a scan according to a relaxed schedule), thereby enabling reduced power consumption for the sensor assembly 140. On the other hand, once the radar device 142-j observing the certain monitoring direction indicated occupancy, also the other ones of the plurality of radar devices 142 may be set to the active state (or controlled to perform a scan according to their 'normal' schedule).

Throughout the examples described in the foregoing and in the following, the control portion 145 of the sensor assembly 140 is described as the entity that is responsible for carrying out the respective operations of the method 200, 300. However, in other examples at least some of these functions may be carried out in another entity, e.g. in the gateway device 150, in the server device 160 and/or an element of the HVAC system 170.

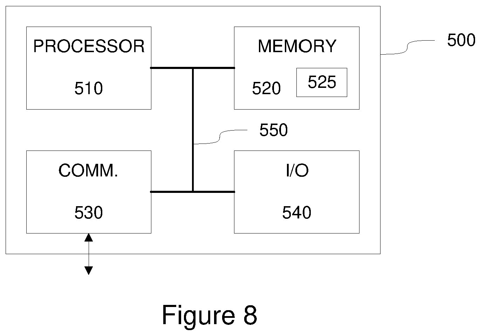

Figure 8 illustrates a block diagram of some components of an apparatus 500 that may be employed to implement operations described with references to the control portion 145 of the sensor assembly 140. The apparatus 500 comprises a processor 510 and a memory 520. The memory 520 may store data and computer program code 525. The apparatus 500 may further comprise communication means 530 for wired or wireless communication with other apparatuses and/or user I/O (input/output) components 540 that may be arranged, together with the processor 510 and a portion of the computer program code 525, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 500 are communicatively coupled to each other via a bus 550 that enables transfer of data and control information between the components.

The memory 520 and a portion of the computer program code 525 stored therein may be further arranged, with the processor 510, to cause the apparatus 300 to perform at least some aspects of operation of the control portion 145. The processor 510 is configured to read from and write to the memory 520. Although the processor 510 is depicted as a respective single component, it may be implemented as respective one or more separate processing components. Similarly, although the memory 520 is depicted as a respective single component, it may be implemented as respective one or more separate components, some or all of which may be integrated/removable and/or may provide permanent / semi-permanent/ dynamic/cached storage.

The computer program code 525 may comprise computer-executable instructions that implement at least some aspects of operation of the control portion 145 when loaded into the processor 310. As an example, the computer program code 525 may include a computer program consisting of one or more sequences of one or more instructions. The processor 510 is able to load and execute the computer program by reading the one or more sequences of one or more instructions included therein from the memory 520. The one or more sequences of one or more instructions may be configured to, when executed by the processor 510, cause the apparatus 500 to perform at least some aspects of operation of the control portion 145. Hence, the apparatus 500 may comprise at least one processor 510 and at least one memory 520 including the computer program code 525 for one or more programs, the at least one memory 520 and the computer program code 525 configured to, with the at least one processor 510, cause the apparatus 500 to perform at least some aspects of operation of the control portion 145.

The computer program code 525 may be provided e.g. a computer program product comprising at least one computer-readable non-transitory medium having the computer program code 525 stored thereon, which computer program code 525, when executed by the processor 510 causes the apparatus 300 to perform at least some aspects of operation of the control portion 145. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A sensor assembly (140) for controlling one or more aspects of light output of a plurality of luminaires (120) of a lighting system (100) arranged for illuminating a space, the sensor assembly (140) comprising a control portion (145), a communication portion (146) for communication with other elements of the lighting system (100) and at least one sensor unit (141) for observing environmental characteristics in said space,
wherein said at least one sensor unit (141) comprises a remote sensing device (142) and a light sensor (143),
**characterized in that** the sensor assembly (140) comprises a plurality of said sensor units (141) for observing environmental characteristics in said space, wherein each sensor unit (141-j) is arranged to observe a respective predefined monitoring direction with respect to the sensor assembly (140) that is different from respective predefined monitoring directions of other ones of the plurality of sensor units (141), wherein each sensor unit (141-j) comprises a respective remote sensing device (142-j) for detecting objects in the respective monitoring direction and a respective light sensor (143-j) for observing a light level in the respective monitoring direction, and wherein the control portion (145) is arranged to:
obtain respective luminaire identifications for said plurality of luminaires (120);
determine a respective luminaire direction with respect to the sensor assembly (140) for said plurality of luminaires (120) on basis of respective light levels indicated by the light sensors (143-j);
determine, on basis of respective monitoring directions of said plurality of sensor units (141) in relation to the determined luminaire directions, a lighting control configuration for controlling said one or more aspects of light output of said plurality of luminaires (120) on basis of sensor data received from said plurality of sensor units (141); and
control, via said communication portion (146) using the obtained luminaire identifications, said one or more aspects of light output of said plurality of luminaires (120) in accordance with the determined lighting control configuration.

2. A sensor assembly (140) according to claim 1, wherein the control portion (145) is further arranged to initialize the lighting control configuration to define controlling said one or more aspects of light output on basis of the sensor data received from said remote sensing devices (142-j) in the following manner:
one of switching or keeping on the light output of each of said plurality of luminaires (120) in response to any of said remote sensing devices (142-j) indicating occupancy in said space, and/or
switching off the light output of each said plurality of luminaires (120) in response to none said remote sensing devices (142-j) indicating occupancy in said space.

3. A sensor assembly (140) according to claim 1 or 2, wherein determining the lighting control configuration comprises:
mapping each of said plurality of luminaires (120) to one of the sensor units (141-j) on basis of the respective monitoring directions in relation to the respective directions of said plurality of luminaires (120) with respect to the sensor assembly (140), and
adjusting the lighting control configuration to define controlling respective light outputs of said plurality of luminaires (120) in dependence of the mapping of the plurality of luminaires (120) to the sensor units (141-j).

4. A sensor assembly (140) according to claim 3, wherein adjusting the lighting control configuration comprises adjusting the lighting control configuration to define controlling said one or more aspects of light output on basis of the sensor data received from said remote sensing devices (142-j) in the following manner in response to at least one of the remote sensing devices (142-j) indicating occupancy in said space:
apply a first light intensity level for the respective light output of those luminaires (120-k) that are mapped to a sensor unit (141-j) including a remote sensing device (142-j) that indicates occupancy in said space, and
apply a second light intensity level for the respective light output of those luminaires (120-k) that are not mapped to a sensor unit (141-j) including a remote sensing device (142-j) that indicates occupancy in said space, wherein the second light intensity level is lower than the first light intensity level.

5. A sensor assembly (140) according to any of claims 1 to 4, wherein determining respective luminaire directions with respect to the sensor assembly (140) comprises, for said plurality of luminaires (120):
determining a respective change in the light level indicated by each of the light sensors (143-j) upon switching on and/or off the light output of the respective luminaire (120-k); and
determining the direction of the respective luminaire (120-k) with respect to the sensor assembly (140) on basis of the respective changes in the light level determined for the light sensors (143-j) and their respective monitoring directions.

6. A sensor assembly (140) according to any of claims 1 to 5, wherein obtaining the respective luminaire identifications for said plurality of luminaires (120) comprises using the communication portion (146) to carry out one of the following:
detect said luminaire identifications by observing communication to and/or from the plurality of luminaires (120);
broadcasting a request for said plurality of luminaires (120) to indicate their luminaire identifications and receiving the respective luminaire identifications from said plurality of luminaires (120).

7. A sensor assembly (140) according to any of claims 1 to 6, wherein one or both of the following applies:
said monitoring directions represent respective center axes of monitoring beams of said remote sensing devices (142-j) and said monitoring directions cover a predefined overall range of directions around the sensor assembly (140) in a reference plane;
said monitoring directions have a predefined non-zero inclination angle with respect to the reference plane.

8. A sensor assembly (140) according to claim 7, wherein one or more of the following applies:
said monitoring directions are evenly spaced over said overall range of directions in the reference plane,
said overall range of directions covers a full circle around the sensor assembly (140) in the reference plane.

9. A sensor assembly (140) according to any of claims 1 to 8, wherein said remote sensing devices (142-j) comprise one of the following:
a plurality of radar devices (142),
a plurality of lidar devices.

10. A sensor assembly (140) according to any of claims 1 to 9, wherein the control portion (145) is further arranged to:
determine a location of the sensor assembly (140) within said space on basis of the sensor data received from said remote sensing devices (142-j) during a monitoring period;
determine a respective occupancy patterns for a plurality of locations in said space on basis of the respective sensor data received from the remote sensing devices (142-j) during the monitoring period in dependence of the determined location of the sensor assembly (140);
determine a type of said space on basis of the determined one or more occupancy patterns; and
adjust the lighting control configuration on basis of the determined type of said space.

11. A sensor assembly (140) according to claim 10, wherein determining the location of the sensor assembly (140) comprises:
determining respective locations of one or more walls of said space with respect to the location of the sensor assembly (140) on basis of the sensor data received from the remote sensing devices (142-j).

12. A sensor assembly (140) according to claim 10 or 11, wherein determining the type of said space comprises:
identifying, from a plurality of predefined occupancy pattern profiles that each represent a respective space type, one that is closest to the determined one or more occupancy profiles; and
determining the type of said space is the space type represented by the identified one of the predefined occupancy pattern profiles.

13. A sensor assembly (140) according to any of claims 10 to 12, wherein determining the lighting control configuration comprises:
determining a shape and/or size of said space on basis of the respective locations of the one or more walls of said space; and
determining the type of said space further on basis of the shape and/or size of said space.

14. A sensor assembly (140) according to claim 13, wherein the control portion (145) is further arranged to:
identify said space as one of a plurality of spaces of a building on basis of the shape and size of said space in view of a floorplan of the building in which said space is located, the floorplan defining the plurality of spaces of the building and indicating respective intended locations of one or more sensor assemblies within the building by
identify, in the floorplan, a space of the plurality of spaces that includes an intended location of a sensor assembly and has a shape and size matching those determined for said space.

15. A method (200) for operating a sensor assembly (140) in a space illuminated by a plurality of luminaires (120),
the sensor assembly (140) comprising at least one sensor unit (141) arranged for observing environmental characteristics in said space,
wherein the at least one sensor unit (141) comprises a remote sensing device (142) and a light sensor (143),
**characterized in that** the sensor assembly (140) comprises a plurality of said sensor units (141) arranged for observing environmental characteristics in said space, wherein each sensor unit (141-j) is arranged to observe a respective predefined monitoring direction with respect to the sensor assembly (140) that is different from respective predefined monitoring directions of other ones of the plurality of sensor units (141), wherein each sensor unit (141-j) comprises a respective remote sensing device (142-j) for detecting objects in the respective monitoring direction and a respective light sensor (143-j) for observing a light level in the respective monitoring direction, wherein the method (200) comprises:
obtaining (202) respective luminaire identifications for said plurality of luminaires (120);
determining (204) a respective luminaire direction with respect to the sensor assembly (140) for said plurality of luminaires (120) on basis of respective light levels indicated by the light sensors (143-j);
determine (206), on basis of respective monitoring directions of said plurality of sensor units (141) in relation to the determined luminaire directions, a lighting control configuration for controlling said one or more aspects of light output of said plurality of luminaires (120) on basis of sensor data received from said plurality of sensor units (141); and
controlling (208), using the obtained luminaire identifications, one or more aspects of light output of said plurality of luminaires (120) in accordance with the determined lighting control configuration.

## Patentansprüche

1. Sensoranordnung (140) zum Steuern eines oder mehrerer Aspekte von Lichtausgabe von einer Vielzahl von Leuchten (120) eines Beleuchtungssystems (100), das zum Beleuchten eines Raums eingerichtet ist, wobei die Sensoranordnung (140)
einen Steuerungsanteil (145),
einen Kommunikationsanteil (146) für Kommunikation mit anderen Elementen des Beleuchtungssystems (100) und
mindestens eine Sensoreinheit (141) zum Beobachten von Umgebungscharakteristika in dem Raum umfasst,
wobei die mindestens eine Sensoreinheit (141) eine Fernerfassungsvorrichtung (142) und einen Lichtsensor (143) umfasst,
**dadurch gekennzeichnet, dass** die Sensoranordnung (140) eine Vielzahl der Sensoreinheiten (141) zum Beobachten von Umgebungscharakteristika in dem Raum umfasst, wobei jede Sensoreinheit (141-j) eingerichtet ist zum Beobachten einer jeweiligen vordefinierten Überwachungsrichtung in Bezug auf die Sensoranordnung (140), die sich von jeweiligen vordefinierten Überwachungsrichtungen von anderen aus der Vielzahl von Sensoreinheiten (141) unterscheidet, wobei jede Sensoreinheit (141-j) eine jeweilige Fernerfassungsvorrichtung (142-j) zum Detektieren von Objekten in der jeweiligen Überwachungsrichtung und einen jeweiligen Lichtsensor (143-j) zum Beobachten eines Lichtpegels in der jeweiligen Überwachungsrichtung umfasst, und wobei der Steuerungsanteil (145) eingerichtet ist zum:
Erhalten jeweiliger Leuchtenidentifikationen für die Vielzahl von Leuchten (120);
Bestimmen einer jeweiligen Leuchtenrichtung in Bezug auf die Sensoranordnung (140) für die Vielzahl von Leuchten (120) auf der Grundlage jeweiliger Lichtpegel, die durch die Lichtsensoren (143-j) angegeben werden;
Bestimmen, auf der Grundlage von jeweiligen Überwachungsrichtungen der Vielzahl von Sensoreinheiten (141) in Bezug auf die bestimmten Leuchtenrichtungen, einer Beleuchtungsteuerungskonfiguration zum Steuern des einen oder der mehreren Aspekte von Lichtausgabe der Vielzahl von Leuchten (120) auf der Grundlage von Sensordaten, die von der Vielzahl von Sensoreinheiten (141) empfangen wurden; und
Steuern, über den Kommunikationsanteil (146) unter Verwendung der erhaltenen Leuchtenidentifikationen, des einen oder der mehreren Aspekte von Lichtausgabe der Vielzahl von Leuchten (120) gemäß der bestimmten Beleuchtungsteuerungskonfiguration.

2. Sensoranordnung (140) nach Anspruch 1, wobei der Steuerungsanteil (145) ferner eingerichtet ist zum Initialisieren der Beleuchtungsteuerungskonfiguration zum Definieren der Steuerung des einen oder der mehreren Aspekte von Lichtausgabe auf der Grundlage der Sensordaten, die von den Fernerfassungsvorrichtungen (142-j) erhalten wurden, auf die folgende Weise:
Einschalten oder Eingeschaltethalten der Lichtausgabe von jeder aus der Vielzahl von Leuchten (120), als Reaktion darauf, dass irgendeine der Fernerfassungsvorrichtungen (142-j) Belegung in dem Raum angibt, und/oder
Ausschalten der Lichtausgabe von jeder aus der Vielzahl von Leuchten (120), als Reaktion darauf, dass keine der Fernerfassungsvorrichtungen (142-j) Belegung in dem Raum angibt.

3. Sensoranordnung (140) nach Anspruch 1 oder 2, wobei Bestimmen der Beleuchtungsteuerungskonfiguration umfasst:
Zuordnen von jeder aus der Vielzahl von Leuchten (120) zu einer der Sensoreinheiten (141-j) auf der Grundlage der jeweiligen Überwachungsrichtungen in Bezug auf jeweilige Richtungen der Vielzahl von Leuchten (120) in Bezug auf die Sensoranordnung (140) und
Anpassen der Beleuchtungsteuerungskonfiguration zum Definieren von Steuerung jeweiliger Lichtausgaben der Vielzahl von Leuchten (120) in Abhängigkeit von der Zuordnung der Vielzahl von Leuchten (120) zu den Sensoreinheiten (141-j).

4. Sensoranordnung (140) nach Anspruch 3, wobei Anpassen der Beleuchtungsteuerungskonfiguration Anpassen der Beleuchtungsteuerungskonfiguration zum Definieren der Steuerung des einen oder der mehreren Aspekte von Lichtausgabe auf der Grundlage der Sensordaten, die von den Fernerfassungsvorrichtungen (142-j) erhalten wurden, auf die folgende Weise umfasst, als Reaktion darauf, dass mindestens eine der Fernerfassungsvorrichtungen (142-j) Belegung in dem Raum angibt:
Anwenden eines ersten Lichtintensitätspegels für die jeweilige Lichtausgabe jener Leuchten (120-k), die einer Sensoreinheit (141-j) zugeordnet sind, einschließlich einer Fernerfassungsvorrichtung (142-j), die Belegung in dem Raum angibt, und
Anwenden eines zweiten Lichtintensitätspegels für die jeweilige Lichtausgabe jener Leuchten (120-k), die keiner Sensoreinheit (141-j) zugeordnet sind, einschließlich einer Fernerfassungsvorrichtung (142-j), die Belegung in dem Raum angibt, wobei der zweite Lichtintensitätspegel niedriger als der erste Lichtintensitätspegel ist.

5. Sensoranordnung (140) nach einem der Ansprüche 1 bis 4, wobei Bestimmen jeweiliger Leuchtenrichtungen in Bezug auf die Sensoranordnung (140), für die Vielzahl von Leuchten (120), Folgendes umfasst:
Bestimmen einer jeweiligen Änderung des durch jeden der Lichtsensoren (143-j) beim Ein- und/oder Ausschalten der Lichtausgabe der jeweiligen Leuchte (120-k) angegebenen Lichtpegels; und
Bestimmen der Richtung der jeweiligen Leuchte (120-k) in Bezug auf die Sensoranordnung (140) auf der Grundlage der jeweiligen Änderungen des Lichtpegels, bestimmt für die Lichtsensoren (143-j), und deren jeweiligen Überwachungsrichtungen.

6. Sensoranordnung (140) nach einem der Ansprüche 1 bis 5, wobei Erhalten der jeweiligen Leuchtenidentifikationen für die Vielzahl von Leuchten (120) Verwenden des Kommunikationsanteils (146) zum Ausführen des Folgenden umfasst:
Detektieren der Leuchtenidentifikationen durch Beobachten von Kommunikation zu und/oder von der Vielzahl von Leuchten (120);
Rundsenden einer Anfrage für die Vielzahl von Leuchten (120), deren Leuchtenidentifikationen anzugeben, und Empfangen der jeweiligen Leuchtenidentifikationen von der Vielzahl von Leuchten (120) .

7. Sensoranordnung (140) nach einem der Ansprüche 1 bis 6, wobei eines oder beides der Folgenden gilt:
die Überwachungsrichtungen repräsentieren jeweilige Mittelachsen von Überwachungsstrahlen der Fernerfassungsvorrichtungen (142-j) und die Überwachungsrichtungen decken einen vordefinierten Gesamtbereich von Richtungen um die Sensoranordnung (140) in einer Referenzebene ab;
wobei die Überwachungsrichtungen einen vordefinierten Nicht-Null-Neigungswinkel in Bezug auf die Referenzebene aufweisen.

8. Sensoranordnung (140) nach Anspruch 7, wobei eines oder mehrere der Folgenden gelten:
die Überwachungsrichtungen sind gleichmäßig über den Gesamtbereich von Richtungen in der Referenzebene beabstandet,
der Gesamtbereich von Richtungen deckt einen Vollkreis um die Sensoranordnung (140) in der Referenzebene ab.

9. Sensoranordnung (140) nach einem der Ansprüche 1 bis 8, wobei die Fernerfassungsvorrichtungen (142-j) eines der Folgenden umfassen:
eine Vielzahl von Radarvorrichtungen (142),
eine Vielzahl von Lidarvorrichtungen.

10. Sensoranordnung (140) nach einem der Ansprüche 1 bis 9, wobei der Steuerungsanteil (145) ferner eingerichtet ist zum:
Bestimmen eines Standorts der Sensoranordnung (140) innerhalb des Raums auf der Grundlage der Sensordaten, die von den Fernerfassungsvorrichtungen (142-j) während eines Überwachungszeitraums empfangen wurden;
Bestimmen eines jeweiligen Belegungsmusters für eine Vielzahl von Standorten in dem Raum auf der Grundlage der jeweiligen Sensordaten, die von den Fernerfassungsvorrichtungen (142-j) während des Überwachungszeitraums empfangen wurden, in Abhängigkeit von dem bestimmten Standort der Sensoranordnung (140);
Bestimmen einer Art von Raum auf der Grundlage des einen oder der mehreren bestimmten Belegungsmuster; und
Anpassen der Beleuchtungsteuerungskonfiguration auf der Grundlage der bestimmten Art des Raums.

11. Sensoranordnung (140) nach Anspruch 10, wobei Bestimmen des Standorts der Sensoranordnung (140) umfasst:
Bestimmen jeweiliger Standorte von einer oder mehreren Wänden des Raums in Bezug auf den Standort der Sensoranordnung (140) auf der Grundlage der Sensordaten, die von den Fernerfassungsvorrichtungen (142-j) empfangen wurden.

12. Sensoranordnung (140) nach Anspruch 10 oder 11, wobei Bestimmen der Art des Raums umfasst:
Identifizieren, aus einer Vielzahl von vordefinierten Belegungsmusterprofilen, die jeweils eine jeweilige Raumart repräsentieren, eines, das dem einen oder den mehreren Belegungsprofilen am nächsten ist; und
Bestimmen der Art des Raums als die Raumart, die durch das Identifizierte aus den vordefinierten Belegungsmusterprofilen repräsentiert wird.

13. Sensoranordnung (140) nach einem der Ansprüche 10 bis 12, wobei Bestimmen der Beleuchtungsteuerungskonfiguration umfasst:
Bestimmen einer Gestalt und/oder Größe des Raums auf der Grundlage der jeweiligen Standorte der einen oder der mehreren Wände des Raums; und
Bestimmen der Art des Raums ferner auf der Grundlage der Gestalt und/oder Größe des Raums.

14. Sensoranordnung (140) nach Anspruch 13, wobei der Steuerungsanteil (145) ferner eingerichtet ist zum:
Identifizieren des Raums als einen aus einer Vielzahl von Räumen eines Gebäudes auf der Grundlage der Gestalt und Größe des Raums angesichts eines Grundrisses des Gebäudes, in dem sich der Raum befindet, wobei der Grundriss die Vielzahl von Räumen des Gebäudes definiert und jeweilige beabsichtigte Standorte von einer oder mehreren Sensoranordnungen innerhalb des Gebäudes angibt durch
Identifizieren, in dem Grundriss, eines Raums aus der Vielzahl von Räumen, der einen beabsichtigten Standort einer Sensoranordnung beinhaltet und eine Gestalt und Größe aufweist, die mit jener für den Raum bestimmten übereinstimmt.

15. Verfahren (200) zum Betreiben einer Sensoranordnung (140) in einem Raum, der durch eine Vielzahl von Leuchten (120) beleuchtet wird,
wobei die Sensoranordnung (140) mindestens eine Sensoreinheit (141), eingerichtet zum Beobachten von Umgebungscharakteristika in dem Raum, umfasst,
wobei die mindestens eine Sensoreinheit (141) eine Fernerfassungsvorrichtung (142) und einen Lichtsensor (143) umfasst,
**dadurch gekennzeichnet, dass** die Sensoranordnung (140) eine Vielzahl von den Sensoreinheiten (141), eingerichtet zum Beobachten von Umgebungscharakteristika in dem Raum, umfasst, wobei jede Sensoreinheit (141-j) eingerichtet ist zum Beobachten einer jeweiligen vordefinierten Überwachungsrichtung in Bezug auf die Sensoranordnung (140), die sich von jeweiligen vordefinierten Überwachungsrichtungen von anderen aus der Vielzahl von Sensoreinheiten (141) unterscheidet, wobei jede Sensoreinheit (141-j) eine jeweilige Fernerfassungsvorrichtung (142-j) zum Detektieren von Objekten in der jeweiligen Überwachungsrichtung und einen jeweiligen Lichtsensor (143-j) zum Beobachten eines Lichtpegels in der jeweiligen Überwachungsrichtung umfasst, wobei das Verfahren (200) Folgendes umfasst:
Erhalten (202) jeweiliger Leuchtenidentifikationen für die Vielzahl von Leuchten (120);
Bestimmen (204) einer jeweiligen Leuchtenrichtung in Bezug auf die Sensoranordnung (140) für die Vielzahl von Leuchten (120) auf der Grundlage jeweiliger Lichtpegel, die durch die Lichtsensoren (143-j) angegeben werden;
Bestimmen (206), auf der Grundlage von jeweiligen Überwachungsrichtungen der Vielzahl von Sensoreinheiten (141) in Bezug auf die bestimmten Leuchtenrichtungen, einer Beleuchtungsteuerungskonfiguration zum Steuern des einen oder der mehreren Aspekte von Lichtausgabe der Vielzahl von Leuchten (120) auf der Grundlage von Sensordaten, die von der Vielzahl von Sensoreinheiten (141) empfangen wurden; und
Steuern (208), unter Verwendung der erhaltenen Leuchtenidentifikationen, eines oder mehrerer Aspekte von Lichtausgabe der Vielzahl von Leuchten (120) gemäß der bestimmten Beleuchtungsteuerungskonfiguration.

## Revendications

1. Ensemble capteur (140) pour commander un ou plusieurs aspects de rendement lumineux d'une pluralité de luminaires (120) d'un système d'éclairage (100) agencé pour éclairer un espace, l'ensemble capteur (140) comprenant une partie de commande (145), une partie de communication (146) pour la communication avec d'autres éléments du système d'éclairage (100), et au moins une unité de capteur (141) pour observer des caractéristiques environnementales dans ledit espace,
dans lequel ladite au moins une unité de capteur (141) comprend un dispositif de détection distant (142) et un capteur de lumière (143),
**caractérisé en ce que** l'ensemble capteur (140) comprend une pluralité desdites unités de capteurs (141) pour observer des caractéristiques environnementales dans ledit espace, dans lequel chaque unité de capteur (141-j) est agencée pour observer une direction de surveillance prédéfinie respective par rapport à l'ensemble capteur (140) qui est différente des directions de surveillance prédéfinies respectives d'autres unités de capteur (141), dans lequel chaque unité de capteur (141-j) comprend un dispositif de détection distant respectif (142-j) pour détecter des objets dans la direction de surveillance respective et un capteur de lumière respectif (143-j) pour observer un niveau de lumière dans la direction de surveillance respective, et dans lequel la partie de commande (145) est agencée pour : obtenir des identifications de luminaires respectives pour ladite pluralité de luminaires (120) ;
déterminer une direction de luminaire respective par rapport à l'ensemble capteur (140) pour ladite pluralité de luminaires (120) en fonction de niveaux de lumière respectifs indiqués par les capteurs de lumière (143-j) ;
déterminer, en fonction de directions de surveillance respectives de ladite pluralité d'unités de capteurs (141) relativement aux directions de luminaires déterminées, une configuration de commande d'éclairage pour commander lesdits un ou plusieurs aspects de rendement lumineux de ladite pluralité de luminaires (120) en fonction de données de capteurs reçues à partir de ladite pluralité d'unités de capteurs (141) ; et
commander, par l'intermédiaire de ladite partie de communication (146) à l'aide des identifications de luminaires obtenues, lesdits un ou plusieurs aspects de rendement lumineux de ladite pluralité de luminaires (120) conformément à la configuration de commande d'éclairage déterminée.

2. Ensemble capteur (140) selon la revendication 1, dans lequel la partie de commande (145) est agencée en outre pour initialiser la configuration de commande d'éclairage afin de définir la commande desdits un ou plusieurs aspects de rendement lumineux en fonction des données de capteurs reçues à partir desdits dispositifs de détection distants (142-j) de la manière suivante :
en activant ou maintenant activé le rendement lumineux de chacun de ladite pluralité de luminaires (120) lorsque l'un quelconque desdits dispositifs de détection distants (142j) indique une occupation dans ledit espace, et/ou
désactivant la rendement lumineux de chacun de ladite pluralité de luminaires (120) lorsqu'aucun dispositif de détection distant (142-j) n'indique une occupation dans ledit espace.

3. Ensemble capteur (140) selon la revendication 1 ou 2, dans lequel la détermination de la configuration de commande d'éclairage comprend :
la mise en correspondance de chacun de la pluralité de luminaires (120) avec l'une des unités de capteurs (141-j) en fonction des directions de surveillance respectives relativement aux directions respectives de ladite pluralité de luminaires (120) par rapport à l'ensemble capteur (140), et
l'ajustement de la configuration de commande d'éclairage pour définir la commande de rendements lumineux respectifs de ladite pluralité de luminaires (120) en fonction de la mise en correspondance de la pluralité de luminaires (120) avec les unités de capteurs (141-j).

4. Ensemble capteur (140) selon la revendication 3, dans lequel l'ajustement de la configuration de commande d'éclairage comprend l'ajustement de la configuration de commande d'éclairage pour définir une commande desdits un ou plusieurs aspects de rendement lumineux en fonction des données de capteurs reçues à partir desdits dispositifs de détection distants (142-j) de la manière suivante lorsqu'au moins un des dispositifs de détection distants (142-j) indique une occupation dans ledit espace :
en appliquant un premier niveau d'intensité lumineuse pour le rendement lumineux respectif des luminaires (120-k) qui sont mis en correspondance avec une unité de capteur (141-j) comprenant un dispositif de détection distant (142-j) qui indique une occupation dans ledit espace, et
en appliquant un deuxième niveau d'intensité lumineuse pour le rendement lumineux respectif des luminaires (120-K) qui ne sont pas mis en correspondance avec une unité de capteur (141-j) comportant un dispositif de détection distant (142-j) qui indique une occupation dans ledit espace, dans lequel le deuxième niveau d'intensité lumineuse est inférieur au premier niveau d'intensité lumineuse.

5. Ensemble capteur (140) selon l'une quelconque des revendications 1 à 4, dans lequel la détermination de directions de luminaires respectives par rapport à l'ensemble capteur (140) comprend, pour ladite pluralité de luminaires (120) :
la détermination d'une variation respective du niveau de lumière indiqué par chacun des capteurs de lumière (143-j) lors de l'activation et/ou désactivation du rendement lumineux du luminaire respectif (120-k) ; et
la détermination de la direction du luminaire respectif (120-k) par rapport à l'ensemble capteur (140) en fonction des changements respectifs du niveau d'éclairage déterminé pour les capteurs de lumière (143-j) et de leurs directions de surveillance respectives.

6. Ensemble capteur (140) selon l'une quelconque des revendications 1 à 5, dans lequel l'obtention des identifications de luminaires respectives pour ladite pluralité de luminaires (120) comprend l'utilisation de la partie de communication (146) pour entreprendre l'une des opérations suivantes :
la détection desdites identifications de luminaires en observant la communication vers et/ou depuis la pluralité de luminaires (120) ;
la diffusion d'une demande pour ladite pluralité de luminaires (120) pour indiquer leurs identifications de luminaires et recevoir les identifications de luminaires respectives à partir de ladite pluralité de luminaires (120) .

7. Ensemble capteur (140) selon l'une quelconque des revendications 1 à 6, dans lequel l'un des cas suivants ou les deux se produisent :
lesdites directions de surveillance représentent des axes centraux respectifs de faisceaux de surveillance desdits dispositifs de détection distants (142-j) et lesdites directions de surveillance couvrent une plage globale prédéfinie de directions autour de l'ensemble capteur (140) dans un plan de référence ;
lesdites directions de surveillance ont un angle d'inclinaison prédéfini non nul par rapport au plan de référence.

8. Ensemble capteur (140) selon la revendication 7, dans lequel un ou plusieurs des cas suivants se produisent :
lesdites directions de surveillance sont régulièrement espacées sur ladite plage globale de directions dans le plan de référence,
ladite plage globale de directions couvre un cercle complet autour de l'ensemble capteur (140) dans le plan de référence.

9. Ensemble capteur (140) selon l'une quelconque des revendications 1 à 8, dans lequel lesdits dispositifs de détection distants (142-j) comprennent l'une des pluralités suivantes :
une pluralité de dispositifs radar (142),
une pluralité de dispositifs Lidar.

10. Ensemble capteur (140) selon l'une quelconque des revendications 1 à 9, dans lequel la partie de commande (145) est agencée en outre pour :
déterminer un emplacement de l'ensemble capteur (140) dans ledit espace en fonction de données de capteurs reçues à partir desdits dispositifs de détection distants (142-j) durant une période de surveillance ;
déterminer des modèles d'occupation respectifs pour une pluralité d'emplacements dans ledit espace en fonction des données de capteurs respectives reçues à partir des dispositifs de détection distants (142-j) durant la période de surveillance en fonction de l'emplacement déterminé de l'ensemble capteur (140) ;
déterminer un type dudit espace d'après les un ou plusieurs modèles d'occupation déterminés ; et
ajuster la configuration de commande d'éclairage en fonction du type déterminé dudit espace.

11. Ensemble capteur (140) selon la revendication 10, dans lequel la détermination de l'emplacement de l'ensemble capteur (140) comprend :
la détermination d'emplacements respectifs d'un ou plusieurs murs dudit espace par rapport à l'emplacement de l'ensemble capteur (140) en fonction des données de capteurs reçues à partir des dispositifs de détection distants (142-j).

12. Ensemble capteur (140) selon la revendication 10 ou 11, dans lequel la détermination du type dudit espace comprend :
l'identification, parmi une pluralité de profils d'occupation prédéfinis qui représentent chacun un type d'espace respectif, celui qui est le plus proche d'un ou plusieurs profils d'occupation déterminés ; et
la détermination que le type dudit espace est le type d'espace représenté par le profil identifié des profils de modèles d'occupation prédéfinis.

13. Ensemble capteur (140) selon l'une quelconque des revendications 10 à 12, dans lequel la détermination de la configuration de commande d'éclairage comprend :
la détermination d'une forme et/ou taille dudit espace en fonction des emplacements respectifs des un ou plusieurs murs dudit espace; et
la détermination du type dudit espace en fonction de la forme et/ou taille dudit espace.

14. Ensemble capteur (140) selon la revendication 13, dans lequel la partie de commande (145) est agencée en outre pour :
identifier ledit espace comme l'un d'une pluralité d'espaces d'un bâtiment en fonction de la forme et de la taille dudit espace compte-tenu d'un plan d'étage du bâtiment dans lequel ledit espace est situé, le plan d'étage définissant la pluralité d'espaces du bâtiment et indiquant des emplacements prévus respectifs d'un ou plusieurs ensembles capteurs à l'intérieur du bâtiment en
identifier, dans le plan d'étage, un espace de la pluralité d'espaces qui comporte un emplacement prévu d'un ensemble capteur et dont la forme et la taille correspondent à celles déterminées pour ledit espace.

15. Procédé (200) de fonctionnement d'un ensemble capteur (140) dans un espace éclairé par une pluralité de luminaires (120), l'ensemble capteur (140) comprenant au moins une unité de capteur (141) agencée pour observer des caractéristiques environnementales dans ledit espace,
dans lequel l'au moins une unité de capteur (141) comprend un dispositif de détection distant (142) et un capteur de lumière (143),
**caractérisé en ce que** l'ensemble capteur (140) comprend une pluralité desdites unités de capteurs (141) agencées pour observer des caractéristiques environnementales dans ledit espace, dans lequel chaque unité de capteur (141-j) est agencée pour observer une direction de surveillance prédéfinie respective par rapport à l'ensemble capteur (140) qui est différente de directions de surveillance prédéfinies respectives d'autres unités de capteurs (141), dans lequel chaque unité de capteur (141-j) comprend un dispositif de détection distant respectif (142-j) pour détecter des objets dans la direction de surveillance respective et un capteur de lumière respectif (143-j) pour observer un niveau de lumière dans la direction de surveillance respective, le procédé (200) comprenant :
l'obtention (202) d'identifications de luminaires respectives pour ladite pluralité de luminaires (120) ;
la détermination (204) d'une direction de luminaire respective par rapport à l'ensemble capteur (140) pour ladite pluralité de luminaires (120) en fonction de niveaux de lumière respectifs indiqués par les capteurs de lumière (143-j) ;
la détermination (206), d'après des directions de surveillance respectives de ladite pluralité d'unités de capteur (141) par rapport aux directions de luminaires déterminées, d'une configuration de commande d'éclairage pour commander lesdits un ou plusieurs aspects de rendement lumineux de ladite pluralité de luminaires (120) en fonction de données de capteurs reçues à partir de ladite pluralité d'unités de capteurs (141) ; et
la commande (208), à l'aide des identifications de luminaires obtenues, d'un ou plusieurs aspects de rendement lumineux de ladite pluralité de luminaires (120) conformément à la configuration de commande d'éclairage déterminée.
